(19) Europäisches Patentamt
European Patent Office
Office européen des brevets

(11) EP 3 722 395 A1

(12) # EUROPEAN PATENT APPLICATION
published in accordance with Art. 153(4) EPC

(43) Date of publication:
**14.10.2020 Bulletin 2020/42**

(21) Application number: **18885722.1**

(22) Date of filing: **27.11.2018**

(51) Int Cl.:
***C10M 145/14*** (2006.01) ***C08F 212/02*** (2006.01)
***C08F 220/18*** (2006.01) ***C08F 220/28*** (2006.01)
***C10M 143/10*** (2006.01) ***C10M 159/12*** (2006.01)
***C10N 10/12*** (2006.01) ***C10N 20/00*** (2006.01)
***C10N 20/04*** (2006.01) ***C10N 30/06*** (2006.01)
***C10N 40/02*** (2006.01) ***C10N 40/04*** (2006.01)
***C10N 40/12*** (2006.01) ***C10N 40/25*** (2006.01)
***C10N 40/30*** (2006.01)

(86) International application number:
**PCT/JP2018/043516**

(87) International publication number:
**WO 2019/111752 (13.06.2019 Gazette 2019/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.12.2017 JP 2017233183**
**19.04.2018 JP 2018080675**

(71) Applicant: **Adeka Corporation**
**Tokyo 116-8554 (JP)**

(72) Inventors:
- **YAMAMOTO, Kenji**
**Tokyo 116-8554 (JP)**
- **IGARASHI, Shuhei**
**Tokyo 116-8554 (JP)**
- **HANAMURA, Ryou**
**Tokyo 116-8554 (JP)**

(74) Representative: **Kador & Partner PartG mbB**
**Corneliusstraße 15**
**80469 München (DE)**

(54) **FRICTION-CONTROLLING COMPOUND, AND FRICTION-CONTROLLING COMPOSITION CONTAINING SAID FRICTION-CONTROLLING COMPOUND**

(57) A friction inhibiting compound of the present invention is a friction inhibiting compound including a copolymer (A) that includes a polymerizable monomer (a) and a polymerizable monomer (b) as constituent monomers, wherein the polymerizable monomer (a) includes a specific alkyl acrylate or alkyl methacrylate, the polymerizable monomer(b) is at least one selected from the group consisting of specific hydroxyalkyl acrylates and hydroxyalkyl methacrylates; specific alkyl acrylates and alkyl methacrylates; and aromatic vinyl monomers having 8 to 14 carbon atoms, and a composition ratio of the polymerizable monomer (a) and polymerizable monomer(b) in the copolymer (A), represented by (a):(b), is (10 to 45):(55 to 90) in a molar ratio (provided that a total molar ratio of (a) and (b) is 100), and the weight average molecular weight of the copolymer (A) is 1,000 to 500,000.

EP 3 722 395 A1

**Description**

Technical Field

The present invention relates to a friction inhibiting compound exhibiting a favorable friction reducing effect and a friction inhibiting composition containing the friction inhibiting compound and a base oil.

Lubricating oils containing additives such as extreme pressure agents, friction modifiers and wear prevention agents are used in all sorts of equipment and machinery in order to decrease friction, wear and seizing as far as possible and to extend the service life of the equipment and machinery. In general, organic molybdenum compounds are well known as compounds that exhibit a high friction reduction effect among existing friction modifiers (see PTL 1 and 2). It is said that organic molybdenum compounds form a film of molybdenum disulfide on sliding surfaces where metals come into contact with each other, such as boundary lubrication regions, that is, locations where a certain degree of temperature or load is applied, and exhibit a friction reduction effect, and this effect has been confirmed with all sorts of lubricating oils, such as engine oils. However, organic molybdenum compounds do not necessarily exhibit a friction reduction effect when used under all conditions, and there are cases where a sufficient friction reduction effect cannot be exhibited by organic molybdenum compounds in isolation, depending on application or intended use, and cases where this effect is weakened and friction reduction is difficult under harsh conditions where a large contact surface pressure is applied, such as point contact.

In particular, as examples of additives used for reducing friction under harsh conditions where a particularly large contact surface pressure is applied, such as point contact, PTL 3, for example, discloses extreme pressure agents such as lead naphthenate, sulfurized fatty acid esters, sulfurized sperm oil, terpene sulfide, dibenzyl disulfides, chlorinated paraffins, chloronaphthazantate, tricresyl phosphate, tributyl phosphate, tricresyl phosphite, n-butyl di-n-octyl phosphinate, di-n-butyldihexyl phosphonate, di-n-butylphenyl phosphonate, dibutylphosphoroamidate and amine dibutyl phosphate. In addition, PTL 4 discloses extreme pressure agents such as sulfurized oils and fats, olefin polysulfides, dibenzyl sulfide, monooctyl phosphate, tributyl phosphate, triphenyl phosphite, tributyl phosphite, thiophosphate esters, thiophosphoric acid metal salts, thiocarbamic acid metal salts and acidic phosphate ester metal salts. However, these known extreme pressure agents contain metal elements such as lead and zinc and elements such as chlorine, sulfur and phosphorus, and therefore cause problems such as these elements being a cause of corrosion of sliding surfaces and having an adverse effect on the environment in the disposal of lubricating oils.

In order to solve such problems, PTL 5 discloses an extreme pressure agent for lubricating oils, which includes a copolymer containing an alkyl acrylate and a hydroxyalkyl acrylate as essential constituent monomers, as an extreme pressure agent for lubricating oils which exhibits excellent solution stability and extreme pressure performance. In addition, PTL 6 indicates that a lubricity improver for fuel oils, which contains a fatty acid and a copolymer including a monomer such as a (meth)acrylate and a hydroxyl group-containing vinyl monomer as essential constituent monomers, exhibits improved lubrication properties without causing clouding, solidification or precipitation of crystals even in low temperature conditions such as during winter or in cold regions. When this type of lubricating oil is added to a base oil, if precipitation, white turbidness or solidification occur and a completely dissolved state is not achieved, it is thought that these characteristics cannot be exhibited and use in applications such as extreme pressure agents and lubricity improvers is not possible. However, extreme pressure agents and lubricity improvers used by being dissolved in this type of base oil suffered from problems such as not achieving a sufficient friction reduction effect and not improving the friction reduction performance of a lubricating oil.

Prior Art Documents

Patent Literature

[PTL 1] Japanese Patent Laid-Open No. H07-53983
[PTL 2] Japanese Patent Laid-Open No. H10-17586
[PTL 3] Japanese Patent Laid-Open No. 2002-012881
[PTL 4] Japanese Patent Laid-Open No. 2005-325241
[PTL 5] Japanese Patent Laid-Open No. 2012-041407
[PTL 6] Japanese Patent Laid-Open No. 2017-141439

Summary of the Invention

Problem to be Solved by the Invention

Here, an object to be achieved by the present invention is to provide a friction inhibiting compound exhibiting a friction reducing effect equal to or higher than that of existing extreme pressure agents containing metal elements and the like and a friction inhibiting composition containing the friction inhibiting compound and a base oil.

Means for Solving the Problem

Thus, the inventors conducted extensive studies and as a result, found a friction inhibiting compound exhibiting a strong friction reducing effect, and completed the present invention.

That is, the present invention relates to a friction inhibiting compound including a copolymer (A) that includes a polymerizable monomer (a) and a polymerizable monomer (b) as constituent monomers, wherein the polymerizable monomer (a) includes an alkyl acrylate or an alkyl methacrylate represented by the following formula (1), the polymerizable monomer (b) is at least one selected from the group consisting of hydroxyalkyl acrylates and hydroxyalkyl methacrylates represented by the following formula (2); alkyl acrylates and alkyl methacrylates represented by the following formula (3) ; and aromatic vinyl monomers having 8 to 14 carbon atoms, and a composition ratio of the polymerizable monomer (a) and the polymerizable monomer (b) in the copolymer (A), represented by (a):(b), is (10 to 45):(55 to 90) in a molar ratio (provided that a total molar ratio of (a) and (b) is 100), and the weight average molecular weight of the copolymer (A) is 1,000 to 500,000:

[Chemical Formula 1]

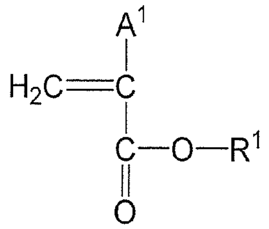

(1)

wherein $R^1$ represents an alkyl group having 4 to 18 carbon atoms, and $A^1$ represents a hydrogen atom or a methyl group;

[Chemical Formula 2]

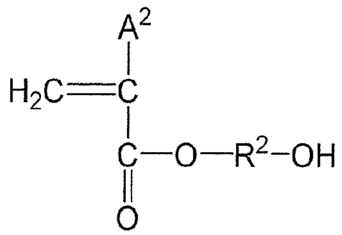

(2)

wherein $R^2$ represents an alkylene group having 2 to 4 carbon atoms, and $A^2$ represents a hydrogen atom or a methyl group;

[Chemical Formula 3]

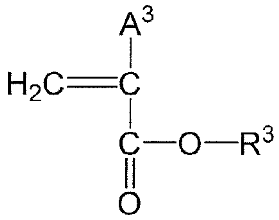

(3)

wherein $R^3$ represents an alkyl group having 1 to 3 carbon atoms, and $A^3$ represents a hydrogen atom or a methyl group.

Effects of the Invention

According to the effects of the present invention, there are provided a friction inhibiting compound exhibiting a friction reducing effect equal to or higher than that of existing extreme pressure agents containing metal elements and the like and a friction inhibiting composition containing the friction inhibiting compound and a base oil.

Best Mode for Carrying Out the Invention

A polymerizable monomer (a) used in a copolymer (A) constituting a friction inhibiting compound of the present invention is a polymerizable monomer including alkyl acrylates or alkyl methacrylates represented by the following formula (1):

[Chemical Formula 4]

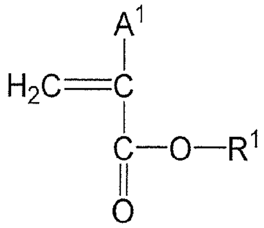

(1)

wherein $R^1$ represents an alkyl group having 4 to 18 carbon atoms, and $A^1$ represents a hydrogen atom or a methyl group.

Examples of $R^1$ in the formula (1) include linear alkyl groups such as a butyl group, a pentyl group, a hexyl group, heptyl, an octyl group, a nonyl group, a decyl group, an undecyl group, a dodecyl group, a tridecyl group, a tetradecyl group, a pentadecyl group, a hexadecyl group, a heptadecyl group, and an octadecyl group; and branched alkyl groups such as a branched butyl group, a branched pentyl group, a branched hexyl group, branched heptyl, a branched octyl group, a branched nonyl group, a branched decyl group, a branched undecyl group, a branched dodecyl group, a branched tridecyl group, a branched tetradecyl group, a branched pentadecyl group, a branched hexadecyl group, a branched heptadecyl group, and a branched octadecyl group.

In addition, $A^1$ represents a hydrogen atom or a methyl group, and a hydrogen atom is preferable in consideration of frictional characteristics of the obtained friction inhibiting compound.

Among such compounds, in consideration of frictional characteristics of the obtained friction inhibiting compound, the polymerizable monomer (a) is preferably an alkyl acrylate in which $R^1$ is an alkyl group having 4 to 18 carbon atoms and $A^1$ is a hydrogen atom, more preferably an alkyl acrylate in which $R^1$ is an alkyl group having 10 to 18 carbon atoms, and particularly preferably an alkyl acrylate in which $R^1$ is an alkyl group having 12 to 16 carbon atoms.

In the polymerizable monomer (a) used in the copolymer (A) constituting the friction inhibiting compound of the present invention, in consideration of frictional characteristics of the obtained friction inhibiting compound, the Hildebrand solubility parameter in the structure after the polymerization reaction (that is, a structure in which the vinyl group becomes a single bond due to the polymerization reaction) is preferably 17.0 to 19.0 $(MPa)^{1/2}$, more preferably 17.5 to 18.4 $(MPa)^{1/2}$, and still more preferably 17.7 to 18.2 $(MPa)^{1/2}$. Here, "Hildebrand solubility parameter" described herein is a parameter that is a value of the solubility of a two-component solution defined based on regular solution theory as a guide and indicates the strength of the bond of a molecular population. There is a tendency in the Hildebrand solubility parameter in which, when a plurality of substances are mixed, substances having similar parameter values are likely to

be mixed and dissolved and substances with greater differences in parameter values are less likely to be mixed and dissolved. Since the Hildebrand solubility parameter δ depends on the type and number of atoms and atom groups present in a target molecular structure, it is calculated using the following Formula (1) according to the Fedors method based on a group contribution method:

[Formula 1]

$$\delta = (E/V)^{1/2} = (\Sigma \Delta e_i / \Sigma v_i)^{1/2} \quad [(MPa)^{1/2}] \qquad (1)$$

wherein E represents a molar cohesive energy [J/mol] of a target molecule, V represents a molecular molar volume [$cm^3$/mol], $\Delta e_i$ represents a partial molar cohesive energy [J/mol], and $v_i$ represents a partial molar volume [$cm^3$/mol]).

Here, for $\Delta e_i$, and $v_i$, numerical values corresponding to the type of atoms and atom groups in the molecular structure can be used from the numerical values stated in the following Table 1, which are parameters in the Fedors method.

[Table 1]

| Parameters for Fedors method | | |
|---|---|---|
| Atom or atomic group | $\Delta e_i$ [cal/mol] | $V_i$ [$cm^3$/mol] |
| $CH_3$ | 1125 | 33.5 |
| $CH_2$ | 1180 | 16.1 |
| CH | 820 | -1.0 |
| C | 350 | -19.2 |
| $H_2C$= | 1030 | 28.5 |
| -CH= | 1030 | 13.5 |
| C= | 1030 | -5.5 |
| HC≡ | 920 | 27.4 |
| -C≡ | 1690 | 6.5 |
| Phenyl | 7630 | 71.4 |
| Phenylene (o.m.p) | 7630 | 52.4 |
| Phenyl (trisubstituted) | 7630 | 33.4 |
| Phenyl (tetrasubstituted) | 7630 | 14.4 |
| Phenyl (pentasubstituted) | 7630 | -4.6 |
| Phenyl (hexasubstituted) | 7630 | -23.6 |
| Ring closure 5 or more atoms | 250 | 16 |
| Ring closure 3 or 4 more atoms | 750 | 18 |
| $CO_3$ (carbonate) | 4200 | 22.0 |
| COOH | 6600 | 28.5 |
| $CO_2$ | 4300 | 18.0 |
| CO | 4150 | 10.8 |
| CHO (aldehyde) | 5100 | 22.3 |
| $CO_2CO_2$ (oxalate) | 6400 | 37.3 |
| $C_2O_3$ (anhydride) | 7300 | 30.0 |
| HCOO (formate) | 4300 | 32.5 |
| $CONH_2$ | 10000 | 17.5 |
| CONH | 8000 | 9.5 |

(continued)

| Parameters for Fedors method | | |
|---|---|---|
| Atom or atomic group | $\Delta e_i$ [cal/mol] | $V_i$ [$cm^3$/mol] |
| CON | 7050 | -7.7 |
| HCON | 6600 | 11.3 |
| HCONH | 10500 | 27.0 |
| COCl | 5000 | 38.0 |
| $NH_2$ | 3000 | 19.2 |
| NH | 2000 | 4.5 |
| N | 1000 | -9.0 |
| -N= | 2800 | 5.0 |
| CN | 6100 | 24.0 |
| $NO_2$ (aliphatic) | 7000 | 24.0 |
| $NO_2$ (aromatic) | 3670 | 32.0 |
| $NO_3$ | 5000 | 33.5 |
| $NO_2$ (nitrite) | 2800 | 33.5 |
| CSN | 4800 | 37.0 |
| NCO | 6800 | 35.0 |
| $NF_2$ | 1830 | 33.1 |
| $NF_2$ | 1210 | 24.5 |
| O | 800 | 3.8 |
| OH | 7120 | 10.0 |
| OH (disubstituted or on adjacent C atoms) | 5220 | 13.0 |

In addition, in the polymerizable monomer (a) used in the copolymer (A) constituting the friction inhibiting compound of the present invention, in consideration of frictional characteristics of the obtained friction inhibiting compound, the polarity term $\delta_p$ of the Hansen solubility parameter in the structure after the polymerization reaction (that is, a structure in which the vinyl group becomes a single bond due to the polymerization reaction) is preferably 0.1 to 4.0 $(MPa)^{1/2}$, more preferably 0.5 to 3.0 $(MPa)^{1/2}$, and still more preferably 1.0 to 2.5 $(MPa)^{1/2}$. The "Hansen solubility parameter" described herein is a parameter which is obtained by dividing the strength of the bond of a molecular population into three components of an intermolecular force which include a London dispersion energy, an interaction energy between dipoles, and a hydrogen bond energy, and used as a scale for the affinity between substances and is composed of a dispersion term $\delta_d$ representing a London dispersion energy, a polarity term $\delta_p$ representing a dipole interaction energy, and a hydrogen bond term $\delta_h$ representing a hydrogen bond energy. Among them, the polarity term $\delta_p$ representing a dipole interaction energy is a term in which the value of $\delta_p$ is greater when the polarity in the molecule is greater. When a plurality of substances are mixed, there is a tendency in the Hansen solubility parameter in which substances having similar parameter values are likely to be mixed and dissolved and substances with greater differences in parameter values are less likely to be mixed and dissolved.

The dispersion term $\delta_d$, the polarity term $\delta_p$ and the hydrogen bond term $\delta_h$ of the Hansen solubility parameter depend on the type and number of atoms and atom groups present in a target molecular structure, and they are calculated using the following Formulae (2) to (4) according to the van Krevelen & Hoftyzer method based on the group contribution method:

[Formula 2]

$$\delta_d = (\Delta E_d / V)^{1/2} = \Sigma F_{di} / \Sigma V_i \quad [(MPa)^{1/2}] \qquad (2)$$

$$\delta_p = (\Delta E_p / V)^{1/2} = (\Sigma F_{pi}{}^2)^{1/2} / \Sigma V_i \quad [(MPa)^{1/2}] \qquad (3)$$

$$\delta_h = (\Delta E_h / V)^{1/2} = (\Sigma E_{hi} / \Sigma V_i)^{1/2} \quad [(MPa)^{1/2}] \qquad (4)$$

wherein $\Delta E_d$ represents a dispersion molar attraction constant [$(MJ/m^3)^{1/2}$/mol], $\Delta E_p$ represents a partial polarity molar attraction constant [$(MJ/m^3)^{1/2}$/mol], $\Delta E_h$ represents a partial hydrogen bond energy [J/mol], V represents a molar volume [$cm^3$/mol], $F_{di}$ represents a partial dispersion molar attraction constant [$(MJ/m^3)^{1/2}$/mol], $V_i$ represents a partial molar volume [$cm^3$/mol], $F_{pi}$ represents a partial polarity molar attraction constant [$(MJ/m^3)^{1/2}$/mol], and $E_{hi}$ represents a partial hydrogen bond energy [J/mol]).

Here, for $F_{di}$, $V_i$, $F_{pi}$, and $E_{hi}$, numerical values corresponding to the type of atoms and atom groups in the molecular structure can be used from the numerical values stated in the following Table 2, which are parameters in the van Krevelen & Hoftyzer method.

[Table 2]

| Parameters for van Krevelen & Hoftyzer method | | | | |
|---|---|---|---|---|
| Atom or atomic group | $F_{di}$ [J/mol] | $F_{pi}$ [J/mol] | $E_{hi}$ [J/mol] | $V_i$ [$cm^3$/mol] |
| $-CH_3$ | 420 | 0 | 0 | 31.7 |
| $-CH_2-$ | 270 | 0 | 0 | 16.1 |
| >CH- | 80 | 0 | 0 | -1.0 |
| >C< | -70 | 0 | 0 | -19.2 |
| $=CH_2$ | 403 | 94 | 143 | 28.5 |
| =CH- | 223 | 70 | 143 | 13.5 |
| =C< | 70 | 0 | 0 | -5.5 |
| $-C_6H_{11}$ | 1620 | 0 | 0 | 95.5 |
| $-C_6H_5$ | 1499 | 110 | 205 | 75.4 |
| $-C_6H_4$ (o.m.p) | 1319 | 110 | 205 | 60.4 |
| -F | 221 | 542 | - | 18.0 |
| -F (disubstituted, $>CF_2$) | 221 | 542 | - | 20.0 |
| -F (trisubstituted, $-CF_3$) | 221 | 542 | - | 22.0 |
| -Cl | 450 | 550 | 400 | 24.0 |
| -Cl (disubstituted, $>CCl_2$) | 450 | 550 | 400 | 26.0 |
| -Cl (trisubstituted, $-CCl_3$) | 450 | 550 | 400 | 27.3 |
| -Br | 550 | 614 | 1023 | 29.0 |
| -Br (disubstituted, $>CBr_2$) | 550 | 614 | 1023 | 31.0 |
| -Br (trisubstituted, $-CBr_3$) | 550 | 614 | 1023 | 32.0 |
| -I | 655 | 655 | 2046 | 32.2 |
| -CN | 430 | 1100 | 2500 | 24.0 |
| -OH | 210 | 500 | 20,000 | 10.0 |
| -OH (disubstituted or on adjacent C atoms) | 210 | 500 | 20,000 | 13.0 |
| -O- | 235 | 409 | 2352 | 3.8 |
| -COH (aldehyde) | 470 | 800 | 4500 | 22.3 |
| >C=O | 290 | 770 | 2000 | 10.5 |

(continued)

| Parameters for van Krevelen & Hoftyzer method | | | | |
|---|---|---|---|---|
| Atom or atomic group | $F_{di}$ [J/mol] | $F_{pi}$ [J/mol] | $E_{hi}$ [J/mol] | $V_i$ [$cm^3$/mol] |
| -COOH | 530 | 420 | 1000 | 28.5 |
| -COO- (ester) | 390 | 490 | 7000 | 18.0 |
| HCOO-(formate) | 530 | - | - | 32.5 |
| -CO-O-CO- (anhydride) | 675 | 1105 | 4838 | 30.0 |
| $-NH_2$ | 280 | 419 | 8400 | 17.9 |
| -NH- | 160 | 210 | 3100 | 4.5 |
| >N= | 20 | 800 | 5000 | -9.0 |
| $-NO_2$ (aliphatic) | 500 | 1070 | 1500 | 24.0 |
| $-NO_2$ (aromatic) | 500 | 1070 | 1500 | 32.0 |
| ->SI-O- | 266 | 307 | 921 | 3.8 |
| -S- (sulfide) | 440 | - | - | 12.0 |
| $=PO_4$- (phosphate) | 740 | 1890 | 6352 | 28.0 |
| Ring (5 or more members) | 190 | - | - | 13.5 |
| Ring (3 or 4 members) | 190 | - | - | 18.0 |

In addition, in the polymerizable monomer (a) used in the copolymer (A) constituting the friction inhibiting compound of the present invention, the values of the dispersion term $\delta_d$ and the hydrogen bond term $\delta_h$ in the Hansen solubility parameter are not particularly limited, and in consideration of frictional characteristics of the obtained friction inhibiting compound, the dispersion term $\delta_d$ is preferably 16.6 to 17.8 $(MPa)^{1/2}$ and more preferably 16.8 to 17.6 $(MPa)^{1/2}$, and the hydrogen bond term $\delta_h$ is preferably 4.0 to 7.0 $(MPa)^{1/2}$ and more preferably 4.4 to 6.0 $(MPa)^{1/2}$.

A polymerizable monomer (b) used in the copolymer (A) constituting the friction inhibiting compound of the present invention is at least one selected from the group consisting of hydroxyalkyl acrylates and hydroxyalkyl methacrylates represented by the following general formula (2); alkyl acrylates and alkyl methacrylates represented by the following formula (3); and aromatic vinyl monomers having 8 to 14 carbon atoms:

[Chemical Formula 5]

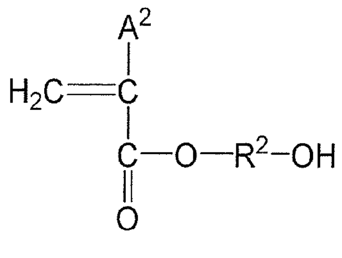

(2)

wherein $R^2$ represents an alkylene group having 2 to 4 carbon atoms, and $A^2$ represents a hydrogen atom or a methyl group;

[Chemical Formula 6]

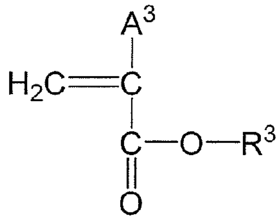

(3)

wherein $R^3$ represents an alkyl group having 1 to 3 carbon atoms, and $A^3$ represents a hydrogen atom or a methyl group.

Examples of $R^2$ in the formula (2) include an ethylene group, a propylene group, a butylene group, a methylethylene group, a methylpropylene group, and a dimethylethylene group. Among these, an alkylene group having 2 to 3 carbon atoms is preferable, and an ethylene group is more preferable.

In addition, $A^2$ represents a hydrogen atom or a methyl group, and a hydrogen atom is preferable in consideration of frictional characteristics of the obtained friction inhibiting compound.

Among such hydroxyalkyl acrylates or hydroxyalkyl methacrylates represented by the formula (2), in consideration of frictional characteristics of the obtained friction inhibiting compound, a hydroxyalkyl acrylate in which $R^2$ is an alkyl group having 2 to 3 carbon atoms and $A^2$ is a hydrogen atom is preferable, and an alkyl acrylate in which $R^2$ is an alkyl group having 2 carbon atoms is more preferable.

Examples of $R^3$ in the formula (3) include a methyl group, an ethyl group, and a propyl group. Among these, in consideration of frictional characteristics of the obtained friction inhibiting compound, a methyl group or an ethyl group is preferable, and a methyl group is more preferable.

In addition, $A^3$ represents a hydrogen atom or a methyl group, and in consideration of frictional characteristics of the obtained friction inhibiting compound, a hydrogen atom is preferable.

In addition, examples of aromatic vinyl monomers having 8 to 14 carbon atoms include monocyclic monomers such as styrene, vinyltoluene, 2,4-dimethylstyrene, and 4-ethylstyrene, and polycyclic monomers such as 2-vinylnaphthalene. Among these, in consideration of frictional characteristics of the obtained friction inhibiting compound, one containing styrene is preferable.

In the polymerizable monomer (b) used in the copolymer (A) constituting the friction inhibiting compound of the present invention, in consideration of frictional characteristics of the obtained friction inhibiting compound, the Hildebrand solubility parameter of the structure (that is, a structure in which the vinyl group becomes a single bond due to the polymerization reaction) after the polymerization reaction is preferably 18.0 to 32.0 $(MPa)^{1/2}$, more preferably 18.5 to 31.0 $(MPa)^{1/2}$, and most preferably 19.0 to 30.0 $(MPa)^{1/2}$. Here, the Hildebrand solubility parameter can be calculated according to the above method.

In addition, the polarity term $\delta_p$ of the Hansen solubility parameter of the structure after the polymerization reaction of the polymerizable monomer (b) used in the copolymer (A) constituting the friction inhibiting compound of the present invention is preferably 0.1 to 12.0 $(MPa)^{1/2}$, more preferably 0.5 to 10.0 $(MPa)^{1/2}$, and most preferably 1.0 to 9.0 $(MPa)^{1/2}$ in consideration of frictional characteristics of the obtained friction inhibiting compound.

In addition, the value of the dispersion term $\delta_d$ of the Hansen solubility parameter of the structure after the polymerization reaction of the polymerizable monomer (b) used in the copolymer (A) constituting the friction inhibiting compound of the present invention is not particularly limited, and is preferably 17.5 to 22.0 $(MPa)^{1/2}$ and more preferably 18.0 to 21.0 $(MPa)^{1/2}$ in consideration of frictional characteristics of the obtained friction inhibiting compound.

In addition, the value of the hydrogen bond term $\delta_h$ of the Hansen solubility parameter of the structure after the polymerization reaction of the polymerizable monomer (b) used in the copolymer (A) constituting the friction inhibiting compound of the present invention is not particularly limited, and is preferably 0.1 to 32.0 $(MPa)^{1/2}$, more preferably 0.5 to 24.0 $(MPa)^{1/2}$ and most preferably 1.0 to 16.0 $(MPa)^{1/2}$ in consideration of frictional characteristics of the obtained friction inhibiting compound.

Regarding the polymerizable monomer (b) used in the copolymer (A) constituting the friction inhibiting compound of the present invention, among the above compounds, at least one selected from the group consisting of hydroxyalkyl acrylates and hydroxyalkyl methacrylates represented by the formula (2); and aromatic vinyl monomers having 8 to 14 carbon atoms is preferable in consideration of frictional characteristics of the obtained friction inhibiting compound.

Regarding the combination of the polymerizable monomer (a) and the polymerizable monomer (b) used in the copolymer (A) constituting the friction inhibiting compound of the present invention, in consideration of friction performance of the obtained friction inhibiting compound, a combination in which the difference in the polarity term $\delta_p$ of the Hansen solubility parameter is 0.1 to 12.0 $(MPa)^{1/2}$ is preferable, a combination in which the difference is 0.2 to 10.0 $(MPa)^{1/2}$ is more preferable, and a combination in which the difference is 0.5 to 6.0 $(MPa)^{1/2}$ is particularly preferable. The

difference in the polarity term of the Hansen solubility parameter can be appropriately selected from among the above polymerizable monomer (a) and polymerizable monomer (b) and adjusted. Here, when at least one of the polymerizable monomer (a) and the polymerizable monomer (b) is composed of two or more types of polymerizable monomers, one or a plurality of polymerizable monomers constituting the polymerizable monomer (a) or the polymerizable monomer (b) is considered as the number corresponding to each molar ratio or polymerizable monomers included in the structure, the Hansen solubility parameter of the polymerizable monomer (a) or the polymerizable monomer (b) can be calculated in the same manner as in the above method, and a difference is calculated based on the value.

The difference in the hydrogen bond term $\delta_h$ of the Hansen solubility parameter between the polymerizable monomer (a) and the polymerizable monomer (b) is not particularly limited, and is preferably 0.2 to 20.0 $(MPa)^{1/2}$, more preferably 0.5 to 14.0 $(MPa)^{1/2}$, and particularly preferably 1.0 to 10.0 $(MPa)^{1/2}$ in consideration of friction performance of the obtained friction inhibiting compound.

The difference in the dispersion term $\delta_d$ of the Hansen solubility parameter between the polymerizable monomer (a) and the polymerizable monomer (b) is not particularly limited, and is preferably 0.5 to 6.0 $(MPa)^{1/2}$, more preferably 1.0 to 5.0 $(MPa)^{1/2}$, and particularly preferably 1.5 to 4.0 $(MPa)^{1/2}$ in consideration of friction performance of the obtained friction inhibiting compound.

The copolymer (A) constituting the friction inhibiting compound of the present invention includes the polymerizable monomer (a) and the polymerizable monomer (b) as constituent monomers. The polymerization form of the copolymer (A) is not particularly limited, and may be any of a block copolymer, a random copolymer, and a block/random copolymer. In addition, the weight average molecular weight of the copolymer (A) is 1,000 to 500,000, preferably 3,000 to 300,000, and more preferably 5,000 to 200,000. When the weight average molecular weight is within such a range, frictional characteristics of the obtained friction inhibiting compound can be further exhibited. Here, "weight average molecular weight" described herein can be measured through GPC (gel permeation chromatography), and can be calculated in terms of styrene.

The copolymer (A) constituting the friction inhibiting compound of the present invention only is only required to include the polymerizable monomer (a) and the polymerizable monomer (b) as constituent monomers, and may include monomers other than the polymerizable monomer (a) and the polymerizable monomer (b), and in consideration of frictional characteristics of the obtained friction inhibiting compound, a total of the polymerizable monomer (a) and the polymerizable monomer (b) is preferably 90 mol% or more of monomers constituting the copolymer (A), and a copolymer substantially composed of only the polymerizable monomer (a) and the polymerizable monomer (b) is most preferable. In this case, when either or both of the polymerizable monomer (a) and the polymerizable monomer (b) include two or more types of polymerizable monomers, a total molar amount of each thereof is calculated as a molar amount of the polymerizable monomer (a) and the polymerizable monomer (b).

A composition ratio of the polymerizable monomer (a) and the polymerizable monomer (b) in the copolymer (A) constituting the friction inhibiting compound of the present invention is a molar ratio of (a):(b) = (10 to 45):(55 to 90) (provided that a total molar ratio of (a) and (b) is 100), and is preferably (10 to 40) : (60 to 90) and more preferably (10 to 35):(65 to 90.

In addition, in consideration of safety and influence on the environment, the copolymer (A) preferably contains substantially no metal elements or halogen atoms, and specifically, preferably substantially contains only three elements of carbon, hydrogen and oxygen. Even if monomers other than the polymerizable monomer (a) and the polymerizable monomer (b) are used, the copolymer (A) preferably contains no metal elements or halogen atoms.

When the copolymer (A) constituting the friction inhibiting compound of the present invention includes the polymerizable monomer (a) including alkyl acrylates or alkyl methacrylates represented by general formula (1), and the polymerizable monomer (b) including at least one selected from the group consisting of hydroxyalkyl acrylates and hydroxyalkyl methacrylates represented by the formula (2) ; alkyl acrylates and alkyl methacrylates represented by the formula (3); and aromatic vinyl monomers having 8 to 14 carbon atoms, regardless of solubility in a base oil which has been conventionally considered to be an essential condition for exhibiting characteristics, it can be suitably used as a friction inhibiting compound having excellent friction inhibiting ability.

In addition, in consideration of frictional characteristics of the obtained friction inhibiting compound, the copolymer (A) constituting the friction inhibiting compound of the present invention may be a copolymer in which the polymerizable monomer (b) includes at least one polymerizable monomer (b-1) selected from among hydroxyalkyl acrylates and hydroxyalkyl methacrylates represented by the formula (2) and a polymerizable monomer (b-2) composed of at least one aromatic vinyl monomer having 8 to 14 carbon atoms, and the composition ratio of the polymerizable monomers (a), (b-1), and (b-2) in the copolymer (A) is a molar ratio of (a) : (b-1) : (b-2) = (10 to 45) : (2 to 80) : (5 to 88) (provided that a total molar ratio of (a) : (b-1) : (b-2) is 100). Specific structures of the polymerizable monomer (a), the polymerizable monomer (b-1), and the polymerizable monomer (b-2) in this case can be selected from among the above polymerizable monomer (a) and polymerizable monomer (b).

When the copolymer (A) used in the present invention includes the polymerizable monomer (a), the polymerizable monomer (b-1), and the polymerizable monomer (b-2), a difference between the Hildebrand solubility parameter

of the polymerizable monomer (a) and the Hildebrand solubility parameter calculated based on the monomer structure and the molar ratio of the polymerizable monomer (b-1) and the polymerizable monomer (b-2) is not particularly limited, and is preferably 2.5 to 20.0 $(MPa)^{1/2}$, more preferably 3.0 to 18.0 $(MPa)^{1/2}$, and particularly preferably 3.5 to 16.0 $(MPa)^{1/2}$ in consideration of frictional characteristics of the obtained friction inhibiting compound.

In addition, when the copolymer (A) used in the present invention includes the polymerizable monomer (a), the polymerizable monomer (b-1) and the polymerizable monomer (b-2), a difference between the Hansen solubility parameter of the polymerizable monomer (a) and the Hansen solubility parameter calculated based on the monomer structure and the molar ratio of the polymerizable monomer (b-1) and the polymerizable monomer (b-2) is not particularly limited. In consideration of frictional characteristics of the obtained friction inhibiting compound, a combination in which a difference between the polarity term $\delta_p$ of the Hansen solubility parameter of the polymerizable monomer (a) and the polarity term $\delta_p$ of the Hansen solubility parameter calculated based on the monomer structure and the molar ratio of the polymerizable monomer (b-1) and the polymerizable monomer (b-2) is 0.1 to 12.0 $(MPa)^{1/2}$ is preferable, a combination in which a difference therebetween is 0.2 to 8.0 $(MPa)^{1/2}$ is more preferable, and a combination in which a difference therebetween is 0.5 to 6.0 $(MPa)^{1/2}$ is particularly preferable.

A difference between the dispersion term $\delta_d$ of the Hansen solubility parameter of the polymerizable monomer (a) and the dispersion term $\delta_d$ of the Hansen solubility parameter calculated based on the monomer structure and the molar ratio of the polymerizable monomer (b-1) and the polymerizable monomer (b-2) is not particularly limited, and is preferably 0.5 to 6.0 $(MPa)^{1/2}$, more preferably 1.0 to 5.0 $(MPa)^{1/2}$, and particularly preferably 2.0 to 4.0 $(MPa)^{1/2}$ in consideration of frictional characteristics of the obtained friction inhibiting compound.

A difference between the hydrogen bond term $\delta_h$ of the Hansen solubility parameter of the polymerizable monomer (a) and the hydrogen bond term $\delta_h$ of the Hansen solubility parameter calculated based on the monomer structure and the molar ratio of the polymerizable monomer (b-1) and the polymerizable monomer (b-2) is not particularly limited, and is preferably 0.2 to 20.0 $(MPa)^{1/2}$, more preferably 0.5 to 14.0 $(MPa)^{1/2}$, and particularly preferably 1.0 to 10.0 $(MPa)^{1/2}$ in consideration of frictional characteristics of the obtained friction inhibiting compound.

When the copolymer (A) constituting the friction inhibiting compound of the present invention includes the polymerizable monomer (a), the polymerizable monomer (b-1) and the polymerizable monomer (b-2), monomers other than the polymerizable monomer (a), the polymerizable monomer (b-1) and the polymerizable monomer (b-2) may be included, and in consideration of frictional characteristics of the obtained friction inhibiting compound, a total of the polymerizable monomer (a), the polymerizable monomer (b-1) and the polymerizable monomer (b-2) is preferably 90 mol% or more of total monomers constituting the copolymer (A), and a copolymer substantially composed of only the polymerizable monomer (a), the polymerizable monomer (b-1) and the polymerizable monomer (b-2) is most preferable. In this case, when at least one of the polymerizable monomer (a), the polymerizable monomer (b-1) and the polymerizable monomer (b-2) includes two or more types of polymerizable monomers, a total molar amount thereof is calculated as molar amounts of the polymerizable monomer (a), the polymerizable monomer (b-1), and the polymerizable monomer (b-2).

When the copolymer (A) constituting the friction inhibiting compound of the present invention includes the polymerizable monomer (a), the polymerizable monomer (b-1) and the polymerizable monomer (b-2), the composition ratio of the polymerizable monomer (a), the polymerizable monomer (b-1) and the polymerizable monomer (b-2) in the copolymer (A) is not particularly limited, and is preferably a molar ratio of (a): (b-1) : (b-2) = (10 to 45): (2 to 80): (5 to 88), more preferably (10 to 45): (5 to 80):(5 to 80), still more preferably (10 to 40):(10 to 60):(20 to 80), and most preferably (10 to 30): (10 to 40): (40 to 80). Here, a total molar ratio is 100 in all cases. When the composition ratio of the polymerizable monomer (a), the polymerizable monomer (b-1) and the polymerizable monomer (b-2) is within such a range, the solubility and dispersibility of the copolymer (A) can be suitably controlled, and each interaction energy of the copolymer can be easily adjusted to be within a specific range, and lubrication performance of the obtained lubricant composition can be further exhibited.

Even if the copolymer (A) constituting the friction inhibiting compound of the present invention includes the polymerizable monomer (a), the polymerizable monomer (b-1) and the polymerizable monomer (b-2), the polymerization form of the copolymer (A) is not particularly limited, and may be any of a block copolymer, a random copolymer, and a block/random copolymer. In addition, the weight average molecular weight of the copolymer (A) is 2,000 to 300,000, preferably 3,000 to 200,000, and more preferably 5,000 to 150,000. When the weight average molecular weight is within such a range, friction inhibition of the obtained friction inhibiting compound can be further exhibited.

Even if the copolymer (A) constituting the friction inhibiting compound of the present invention includes the polymerizable monomer (a), the polymerizable monomer (b-1) and the polymerizable monomer (b-2), in consideration of safety and influence on the environment, the copolymer (A) preferably contains substantially no metal elements or halogen atoms, and specifically, preferably substantially contains only three elements of carbon, hydrogen and oxygen. Even if monomers other than the polymerizable monomer (a), the polymerizable monomer (b-1) and the polymerizable monomer (b-2) are used, all polymerizable monomers preferably do not contain metal elements and halogen atoms, and specifically, contain substantially only two elements of carbon and hydrogen, and preferably substantially contain

only three elements of carbon, hydrogen and oxygen.

A method of producing the copolymer (A) constituting the friction inhibiting compound of the present invention is not particularly limited, and any known method may be used for production. For example, polymerizable monomers can be subjected to a polymerization reaction by a method such as bulk polymerization, emulsion polymerization, suspension polymerization, or solution polymerization for production. In addition, when a friction inhibiting compound is used by being added to a base oil such as a mineral oil or synthetic oil, bulk polymerization or solution polymerization is preferable compared to a polymerization method in which water is used as a solvent such as emulsion polymerization or suspension polymerization, and solution polymerization is more preferable.

In a specific method according to solution polymerization, for example, a solvent and a raw material including the polymerizable monomer (a) and the polymerizable monomer (b) are put into a reaction container, the temperature is then raised to about 50°C to 120°C, an amount of 0.1 to 10 mol% of an initiator with respect to a total amount of polymerizable monomers is added at once or added in a divided manner and the mixture may be stirred for about 1 to 20 hours and reacted so that the weight average molecular weight becomes 2,000 to 300,000. In addition, polymerizable monomers and a catalyst are put together at once, the temperature is then raised to 50°C to 120°C, and the mixture may be stirred for about 1 to 20 hours and reacted so that the weight average molecular weight becomes 2,000 to 300,000.

Examples of solvents that can be used include alcohols such as methanol, ethanol, propanol, and butanol; hydrocarbons such as benzene, toluene, xylene, and hexane; esters such as ethyl acetate, butyl acetate, and isobutyl acetate; ketones such as acetone, methyl ethyl ketone, and methyl isobutyl ketone; ethers such as methoxy butanol, ethoxy butanol, ethylene glycol monomethyl ether, ethylene glycol dimethyl ether, ethylene glycol monobutyl ether, propylene glycol monomethyl ether, propylene glycol dimethyl ether, propylene glycol monobutyl ether, and dioxane; mineral oils such as a paraffinic mineral oil, a naphthenic mineral oil or refined mineral oils that are refined by hydrorefining, solvent dewaxing, solvent extraction, solvent dewaxing, hydrodewaxing, catalytic dewaxing, hydrocraking, alkali distillation, sulfuric acid washing, and a clay treatment; synthetic oils such as poly-$\alpha$-olefin, ethylene-$\alpha$-olefin copolymer, polybutene, alkylbenzene, alkylnaphthalene, polyphenylether, alkyl-substituted diphenyl ether, polyol ester, dibasic acid ester, hindered ester, monoester, and GTL (Gas to Liquids), and mixtures thereof.

Examples of initiators that can be used include azo initiators such as 2,2'-azobis(2-methylpropionitrile), 2,2'-azobis(2-amidinopropane)dihydrochloride, 2,2'-azobis-(N,N-dimethyleneisobutylamidine)dihydrochloride, and 1,1'-azobis(cyclohexyl-1-carbonitrile), organic peroxides such as hydrogen peroxide, benzoyl peroxide, t-butyl hydroperoxide, cumene hydroperoxide, methyl ethyl ketone peroxide, and perbenzoic acid, persulfates such as sodium persulfate, potassium persulfate, and ammonium persulfate, redox initiators such as hydrogen peroxide-$Fe^{3+}$, and other existing radical initiators.

In addition, the copolymer (A) can be obtained by additionally copolymerizing other polymerizable monomers in addition to the polymerizable monomer (a) and the polymerizable monomer (b) as long as the effects of the present invention are not impaired. A method of polymerizing other monomers is not particularly limited, and other polymerizable monomers may be copolymerized after the polymerizable monomer (a) and the polymerizable monomer (b) are polymerized, or other polymerizable monomers may be copolymerized with the polymerizable monomer (a) and the polymerizable monomer (b). The other polymerizable monomers may be any monomer having a polymerizable functional group, and examples thereof include aliphatic vinyl monomers such as vinyl acetate, vinyl propionate, vinyl octanoate, methyl vinyl ether, ethyl vinyl ether, and 2-ethylhexyl vinyl ether; acrylic esters such as methyl acrylate, ethyl acrylate, and propyl acrylate; and amino group-containing monomers such as allylamine, aminoethyl acrylate, aminopropyl acrylate, aminobutyl acrylate, methylaminoethyl acrylate, 2-diphenylamine acrylamide, dimethylaminomethyl acrylate, dimethylaminomethylacrylamide, and N-vinylpyrrolidone. Here, the content of these other polymerizable monomers in the obtained copolymer is preferably 10 mass% or less and more preferably 5 mass% or less. When the content of these other polymerizable monomers in the copolymer (B) exceeds 10 mass%, the effects of the present invention may be impaired.

In the copolymer (A) constituting the friction inhibiting compound of the present invention, in consideration of frictional characteristics, the Hildebrand solubility parameter is preferably 18.0 to 28.0 $(MPa)^{1/2}$, more preferably 18.5 to 27.0 $(MPa)^{1/2}$, and most preferably 19.0 to 26.0 $(MPa)^{1/2}$. In this case, the Hansen solubility parameter of the copolymer (A) can be calculated in the same manner as in the above method in considering one or a plurality of polymerizable monomers constituting the copolymer as the number corresponding to each molar ratio and molecules included in the structure.

The friction inhibiting composition of the present invention is a friction inhibiting composition including a friction inhibiting compound composed of the copolymer (A) and a base oil (B), which includes 0.1 to 50 parts by mass of the friction inhibiting compound when the mass of the base oil (B) is set as 100 parts by mass. In the friction inhibiting composition of the present invention, when the friction inhibiting compound of the present invention is contained in the friction inhibiting composition, extremely high friction reduction performance is exhibited. In the friction inhibiting composition of the present invention, in consideration of frictional characteristics, when the mass of the base oil (B) is set as 100 parts by mass, 0.2 to 20 parts by mass of the friction inhibiting compound is preferably contained, and 0.3 to 10 parts by mass thereof is more preferably contained.

The base oil (B) that can be used in the present invention is not particularly limited, and is appropriately selected from among a mineral base oil, a chemically synthesized base oil, an animal and vegetable base oil and a mixed base oil thereof according to the usage purposes and conditions. Here, examples of mineral base oils include distillate oils obtained by atmospheric distillation of a paraffin-based crude oil, a naphthene-based crude oil or an intermediate crude oil or by vacuum distillation of residual oils in atmospheric distillation, or refined oils obtained by refining them according to a general method, and specifically include a solvent refined oil, a hydrogenated refined oil, a dewaxed oil and a clay treated oil. Examples of chemically synthesized base oils include poly-$\alpha$-olefin, polyisobutylene (polybutene), monoester, diester, polyol ester, silicate ester, polyalkylene glycol, polyphenyl ether, silicone, fluorinated compounds, alkylbenzene and GTL base oil. Among these, poly-$\alpha$-olefin, polyisobutylene (polybutene), diester and polyol ester, or the like can be used for general purposes. Examples of poly-$\alpha$-olefin include those obtained by polymerizing or oligomerizing 1-hexene, 1-octene, 1-nonene, 1-decene, 1-dodecene, 1-tetradecene, and the like or those obtained by hydrogenating them. Examples of diesters include dibasic acids such as glutaric acid, adipic acid, azelaic acid, sebacic acid and dodecane diacid, and diesters of alcohols such as 2-ethylhexanol, octanol, decanol, dodecanol and tridecanol. Examples of polyol esters include esters of polyols such as neopentyl glycol, trimethylolethane, trimethylolpropane, pentaerythritol, dipentaerythritol and tripentaerythritol and fatty acids such as caproic acid, caprylic acid, lauric acid, capric acid, myristic acid, palmitic acid, stearic acid, and oleic acid. Examples of animal and vegetable base oils include vegetable fats and oils such as castor oil, olive oil, cocoa butter, sesame oil, rice bran oil, safflower oil, soybean oil, camellia oil, corn oil, rapeseed oil, palm oil, palm kernel oil, sunflower oil, cottonseed oil and coconut oil, and animal fats and oils such as beef tallow, lard, milk fat, fish oil and whale oil, and these may be used alone or two or more thereof may be used in combination. In addition, as necessary, a highly refined base oil obtained by highly refining such a base oil and reducing the amount of impurities such as sulfur may be used. Among these, chemically synthesized base oils such as poly-$\alpha$-olefin, polyisobutylene (polybutene), diester and polyol ester are preferably included, base oils composed of a hydrocarbon oil such as poly-$\alpha$-olefin are more preferably included, and highly refined base oils of these base oils are most preferably included. In the present invention, in particular, 50 mass% or more of a base oil composed of a hydrocarbon oil is preferably included with respect to a total amount of the base oil because the solubility and dispersibility of the copolymer (A) in the base oil can be suitably controlled, and 90 mass% or more thereof is more preferably included with respect to a total amount of the base oil.

Regarding the base oil (B) used in the friction inhibiting composition of the present invention, in consideration of frictional characteristics and handling properties of the friction inhibiting composition, the Hildebrand solubility parameter is preferably 15.0 to 18.0 $(MPa)^{1/2}$, more preferably 15.5 to 17.5 $(MPa)^{1/2}$, and most preferably 16.0 to 17.0 $(MPa)^{1/2}$.

In the friction inhibiting composition of the present invention, a Hansen solubility parameter interaction distance D between the base oil (B) and the polymerizable monomer (a) constituting the copolymer (A) is not particularly limited, and is, for example, preferably 4.0 to 7.0 $(MPa)^{1/2}$, and more preferably 5.0 to 6.5 $(MPa)^{1/2}$. Here, for example, when Hansen solubility parameters of a compound A are represented as ($\delta_{dA}$, $\delta_{pA}$, $\delta_{hA}$), and Hansen solubility parameters of a compound B are represented as ($\delta_{dB}$, $\delta_{pB}$, $\delta_{hB}$), the "Hansen solubility parameter interaction distance D" described herein is a value calculated according to the following Formula (5) in which solubility parameters of each compound are regarded as coordinate points specified by three terms in a 3-dimensional vector space and a distance between vector coordinate points of the compound A and the compound B is adjusted based on the correction of the influence on the solubility of respective terms.

[Formula 3]

$$D = \{4(\delta_{dA} - \delta_{dB})^2 + (\delta_{pA} - \delta_{pB})^2 + (\delta_{hA} - \delta_{hB})^2\}^{1/2} \quad (5)$$

The Hansen solubility parameter interaction distance D expresses the ease of mixing/ease of dissolution as a single numerical value when a plurality of substances are mixed, and the substances tend to be better mixed/dissolved as the distance D decreases and the substances tend to be difficult to mix or do not dissolve as the distance D increases. When the Hansen solubility parameter interaction distance D between the base oil (B) and the polymerizable monomer (a) is within such a range, the solubility and dispersibility of the copolymer (A) in the base oil (B) can be suitably controlled, and friction performance of the obtained friction inhibiting composition can be further exhibited.

In addition, in the friction inhibiting composition of the present invention, the Hansen solubility parameter interaction distance D between the base oil (B) and the polymerizable monomer (b) constituting the copolymer (A) is not particularly limited, and is, for example, preferably 7.5 to 28.0 $(MPa)^{1/2}$ and more preferably 8.0 to 25.0 $(MPa)^{1/2}$. When the Hansen solubility parameter interaction distance D between the base oil (B) and the polymerizable monomer (b) is within this range, the solubility and dispersibility of the copolymer (A) in the base oil (B) can be suitably controlled, and friction performance of the obtained friction inhibiting composition can be further exhibited.

In order for the solubility and dispersibility of the copolymer (A) in the base oil (B) to be suitably controlled, and

friction performance of the obtained friction inhibiting composition to be further exhibited, in the friction inhibiting composition of the present invention, preferably, the Hansen solubility parameter interaction distance D between the base oil (B) and the polymerizable monomer (a) constituting the copolymer (A) is 4.0 to 7.0 $(MPa)^{1/2}$, and the Hansen solubility parameter interaction distance D between the base oil (B) and the polymerizable monomer (b) constituting the copolymer (A) is 7.5 to 28.0 $(MPa)^{1/2}$. When the Hansen solubility parameter interaction distance D between the base oil (B) and the polymerizable monomer (a) and the polymerizable monomer (b) is within such a range, the friction inhibiting composition of the present invention can exist in a form in which the copolymer (A) composed of the polymerizable monomer (a) and the polymerizable monomer (b) is not dissolved but dispersed in the base oil (B). Thus, unlike conventional lubricants in which an extreme pressure agent is completely dissolved in a base oil, the friction inhibiting compound is not completely dissolved but dispersed in the base oil and thereby high friction inhibiting performance is exhibited. Here, the composition ratio of the polymerizable monomer (a) and the polymerizable monomer (b) in the copolymer (A) in this case can be appropriately adjusted within the above molar ratio range.

In addition, when the copolymer (A) includes the polymerizable monomer (a), the polymerizable monomer (b-1) and the polymerizable monomer (b-2), in the friction inhibiting composition of the present invention, preferably, the Hansen solubility parameter interaction distance D between the base oil (B) and the polymerizable monomer (a) is 4.0 to 7.0 $(MPa)^{1/2}$, the Hansen solubility parameter interaction distance D between the base oil (B) and the polymerizable monomer (b-1) is 10.0 to 28.0 $(MPa)^{1/2}$, and the Hansen solubility parameter interaction distance D between the base oil (B) and the polymerizable monomer (b-2) is 7.5 to 10.0 $(MPa)^{1/2}$ because the solubility and dispersibility of the copolymer (A) in the base oil (B) can be suitably controlled, and friction performance of the obtained friction inhibiting composition can be further exhibited. When the Hansen solubility parameter interaction distance D is within such a range, the friction inhibiting composition of the present invention can exist in a form in which the copolymer (A) composed of the polymerizable monomer (a) and the polymerizable monomer (b) is not dissolved but dispersed in the base oil. Thus, unlike conventional lubricants in which an extreme pressure agent is dissolved in a base oil, the friction inhibiting compound is not completely dissolved but dispersed in the base oil, and thereby high friction inhibiting performance is exhibited. Here, a ratio of the polymerizable monomer (a) and the polymerizable monomer (b) of the copolymer in this case can be appropriately adjusted to be within the above molar ratio range.

The friction inhibiting composition of the present invention can be used in conventional lubricant applications and the like, and can be used in, for example, lubricating oils such as engine oil, gear oil, turbine oil, hydraulic oil, flame retardant hydraulic fluid, refrigerating machine oil, compressor oil, vacuum pump oil, bearing oil, insulating oil, sliding surface oil, rock drill oil, metal processing oil, plastic processing oil, heat treatment oil, and grease, and various fuel oils. Among these, the composition is preferably used in engine oil, bearing oil, and grease, and is most preferably used in an engine oil.

In addition, known additives can be additionally added to the friction inhibiting composition of the present invention according to the purpose of use in consideration of frictional characteristics, wear characteristics, oxidation stability, temperature stability, storage stability, cleanliness, rust prevention, corrosion prevention, handling properties, and the like. For example, one, two or more of an antioxidant, a friction reducing agent, an antiwear agent, an oiliness improving agent, a detergent, a dispersant, a viscosity index improving agent, a pour point depressant, a rust inhibiting agent, a corrosion inhibiting agent, a metal deactivating agent, and an anti-foaming agent may be added, and the total amount of these additives can be, for example, 0.01 to 50 mass% with respect to the total amount of the friction inhibiting composition.

Here, examples of antioxidants include phenolic antioxidants such as 2,6-di-tertiary-butylphenol (hereinafter tertiary butyl is abbreviated as t-butyl), 2,6-di-t-butyl-p-cresol, 2,6-di-t-butyl-4-methylphenol, 2,6-di-t-butyl-4-ethylphenol, 2,4-dimethyl-6-t-butylphenol, 4,4'-methylenebis(2,6-di-t-butylphenol), 4,4'-bis(2,6-di-t-butylphenol), 4,4'-bis(2-methyl-6-t-butylphenol), 2,2'-methylenebis(4-methyl-6-t-butylphenol), 2,2'-methylenebis(4-ethyl-6-t-butylphenol), 4,4'-butylidenebis (3-methyl-6-t-butylphenol), 4,4'-isopropylidenebis(2,6-di-t-butylphenol), 2,2'-methylenebis(4-methyl-6-cyclohexylphenol), 2,2'-methylenebis(4-methyl-6-nonylphenol), 2,2'-isobutylidenebis(4,6-dimethylphenol), 2,6-bis(2'-hydroxy-3'-t-butyl-5'-methylbenzyl)-4-methylphenol, 3-t-butyl-4-hydroxyanisole, 2-t-butyl-4-hydroxyanisole, octyl 3-(4-hydroxy-3,5-di-t-butylphenyl)propionate, stearyl 3-(4-hydroxy-3,5-di-t-butylphenyl)propionate, oleyl 3-(4-hydroxy-3,5-di-t-butylphenyl)propionate, dodecyl 3-(4-hydroxy-3,5-di-t-butylphenyl)propionate, decyl 3-(4-hydroxy-3,5-di-t-butylphenyl)propionate, tetrakis{3-(4-hydroxy-3,5-di-t-butylphenyl)propionyloxymethyl} methane, glycerin monoester 3-(4-hydroxy-3,5-di-t-butylphenyl)propionate, ester of 3-(4-hydroxy-3,5-di-t-butyl-phenyl)propionate and glycerin monooleyl ether, 3-(4-hydroxy-3,5-di-t-butyl-phenyl)propionic acid butylene glycol diester, 3-(4-hydroxy-3,5-di-t-butyl-phenyl)propionic acid thiodiglycol diester, 4,4'-thiobis(3-methyl-6-t-butylphenol), 4,4'-thiobis(2-methyl-6-t-butylphenol), 2,2'-thiobis(4-methyl-6-t-butylphenol), 2,6-di-t-butyl-$\alpha$-dimethylamino-p-cresol, 2,6-di-t-butyl-4-(N,N'-dimethylaminomethylphenol), bis(3,5-di-t-butyl-4-hydroxybenzyl)sulfide, tris{(3,5-di-t-butyl-4-hydroxyphenyl)propionyl-oxyethyl} isocyanurate, tris(3,5-di-t-butyl-4-hydroxyphenyl)isocyanurate, 1,3,5-tris(3,5-di-t-butyl-4-hydroxybenzyl)isocyanurate, bis{2-methyl-4-(3-n-alkylthiopropionyloxy)-5-t-butylphenyl} sulfide, 1,3,5-tris(4-t-butyl-3-hydroxy-2,6-dimethylbenzyl)isocyanurate, tetraphthaloyl-di(2,6-dimethyl-4-t-butyl-3-hydroxybenzyl sulfide), 6-(4-hydroxy-3,5-di-t-butylanilino)-2,4-bis(octylthio)-1,3,5-triazine, 2,2-thio-{diethyl-bis-3-(3,5-di-t-butyl-4-hydroxyphenyl)} propionate, N,N'-hexamethylenebis(3,5-di-t-butyl-4-hydroxy-hydrocinamide), 3,5-di-t-butyl-4-hydroxy-benzyl-phosphorous acid diester, bis(3-methyl-4-hydroxy-5-t-butylbenzyl)sulfide, 3,9-bis[1,1-dimethyl-2-{β-(3-t-butyl-4-hydroxy-5-methylphenyl) propionyloxy}ethyl]-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl) benzene, and bis{3,3'-bis-(4'-hydroxy-3'-t-butylphenyl)butyric acid}glycol ester; naphthylamine antioxidants such as 1-naphthylamine, phenyl-1-naphthylamine, p-octylphenyl-1-naphthylamine, p-nonylphenyl-1-naphthylamine, p-dodecylphenyl-1-naphthylamine, and phenyl-2-naphthylamine; phenylenediamine antioxidants such as N,N'-diisopropyl-p-phenylenediamine, N,N'-diisobutyl-p-phenylenediamine, N,N'-diphenyl-p-phenylenediamine, N,N'-di-β-naphthyl-p-phenylenediamine, N-phenyl-N'-isopropyl-p-phenylenediamine, N-cyclohexyl-N'-phenyl-p-phenylenediamine, N-1,3-dimethylbutyl-N'-phenyl-p-phenylenediamine, dioctyl-p-phenylenediamine, phenylhexyl-p-phenylenediamine, and phenyloctyl-p-phenylenediamine; diphenylamine antioxidants such as dipyridylamine, diphenylamine, p,p'-di-n-butyldiphenylamine, p,p'-di-t-butyldiphenylamine, p,p'-di-t-pentyldiphenylamine, p,p'-dioctyldiphenylamine, p,p'-dinonyldiphenylamine, p,p'-didecyldiphenylamine, p,p'-didodecyldiphenylamine, p,p'-distyryldiphenylamine, p,p'-dimethoxydiphenylamine, 4,4'-bis(4-α,α-dimethylbenzoyl)diphenylamine, p-isopropoxydiphenylamine, and dipyridylamine; phenothiazine antioxidants such as phenothiazine, N-methylphenothiazine, N-ethylphenothiazine, 3,7-dioctylphenothiazine, phenothiazine carboxylate, and phenoselenazine; and zinc dithiophosphate. A preferable blending amount of such an antioxidant is 0.01 to 5 mass% and more preferably 0.05 to 4 mass% with respect to the base oil.

In addition, examples of friction reducing agents include organic molybdenum compounds such as molybdenum dithiocarbamate, and molybdenum dithiophosphate. Examples of molybdenum dithiocarbamate include a compound represented by the following formula (4):

[Chemical Formula 7]

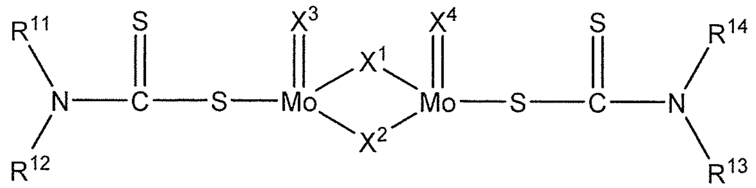

(4)

wherein $R^{11}$ to $R^{14}$ each independently represent a hydrocarbon group having 1 to 20 carbon atoms, and $X^1$ to $X^4$ each independently represent a sulfur atom or an oxygen atom.

In the formula (4), $R^{11}$ to $R^{14}$ each independently represent a hydrocarbon group having 1 to 20 carbon atoms, and examples of such groups include saturated aliphatic hydrocarbon groups such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group and all isomers thereof; unsaturated aliphatic hydrocarbon groups such as an ethenyl group (vinyl group), a propenyl group (allyl group), a butenyl group, a pentenyl group, a hexenyl group, a heptenyl group, an octenyl group, a nonenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, an icocenyl group and all isomers thereof; aromatic hydrocarbon groups such as a phenyl group, a tolyl group, an xylyl group, a cumenyl group, a mesityl group, a benzyl group, a phenethyl group, a styryl group, a cinnamyl group, a benzhydryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, a dodecylphenyl group, a styrenated phenyl group, a p-cumylphenyl group, a phenylphenyl group, a benzylphenyl group, an α-naphthyl group, a β-naphthyl group and all isomers thereof; and cycloalkyl groups such as a cyclopentyl group, a cyclohexyl group, a cycloheptyl group, a methylcyclopentyl group, a methylcyclohexyl group, a methylcycloheptyl group, a cyclopentenyl group, a cyclohexenyl group, a cycloheptenyl group, a methyl cyclopentenyl group, a methylcyclohexenyl group, a methylcycloheptenyl group and all isomers thereof. Among these, a saturated aliphatic hydrocarbon group and an unsaturated aliphatic hydrocarbon group are preferable, a saturated aliphatic hydrocarbon group is more preferable, and a saturated aliphatic hydrocarbon group having 3 to 15 carbon atoms is most preferable.

In addition, in the formula (4), $X^1$ to $X^4$ each independently represent a sulfur atom or an oxygen atom. Among these, preferably, $X^1$ and $X^2$ are a sulfur atom, and more preferably, $X^1$ and $X^2$ are a sulfur atom and $X^3$ and $X^4$ are an oxygen atom.

In a preferable blending amount of the friction reducing agent, the content of molybdenum in the friction inhibiting composition is 50 to 3,000 ppm by mass, more preferably 100 to 2,000 ppm by mass, and most preferably 200 to 1,500

ppm by mass.

In addition, examples of antiwear agents include sulfur additives such as sulfide fats and oils, olefin polysulfide, sulfurized olefin, dibenzyl sulfide, ethyl-3-[[bis(1-methylethoxy)phosphinothioyl]thio]propionate, tris-[(2, or 4)-isoalkylphenol]thiophosphate, 3-(di-isobutoxy-thiophosphorylsulfanyl)-2-methyl-propionic acid, triphenylphosphorothionate, β-dithiophosphorylated propionic acid, methylene bis(dibutyldithiocarbamate), O,O-diisopropyl-dithiophosphorylethyl propionate, 2,5-bis(n-nonyldithio)-1,3,4-thiadiazole, 2,5-bis(1,1,3,3-tetramethylbutanethio) 1,3,4-thiadiazole, and 2,5-bis(1,1,3,3-tetramethyldithio)-1,3,4-thiadiazole; phosphorous compounds such as monooctyl phosphate, dioctyl phosphate, trioctyl phosphate, monobutyl phosphate, dibutyl phosphate, tributyl phosphate, monophenyl phosphate, diphenyl phosphate, triphenyl phosphate, tricresyl phosphate, monoisopropylphenyl phosphate, diisopropyl phenyl phosphate, triisopropyl phenyl phosphate, monotertiary butyl phenyl phosphate, di-tert-butyl phenyl phosphate, tri-tert-butyl phenyl phosphate, triphenyl thiophosphate, monooctyl phosphite, dioctyl phosphite, trioctyl phosphite, monobutyl phosphite, dibutyl phosphite, tributyl phosphite, monophenyl phosphite, diphenyl phosphite, triphenyl phosphite, monoisopropyl phenyl phosphite, diisopropyl phenyl phosphite, triisopropyl phenyl phosphite, mono-tert-butyl phenyl phosphite, di-tert-butyl phenyl phosphite, and tri-tert-butyl phenyl phosphite; organic metal compounds represented by the formula (5) such as zinc dithiophosphate (ZnDTP), metal dithiophosphate (Sb, Mo and the like), metal dithiocarbamate (Zn, Sb, Mo and the like), metal naphthenate, fatty acidmetal salts, metal phosphate, phosphate metal salts, and phosphite metal salts; and also, boron compounds, alkylamine salts of mono and dihexyl phosphate, phosphate amine salts, and mixtures of triphenyl thiophosphate and tert-butyl phenyl derivatives.

[Chemical Formula 8]

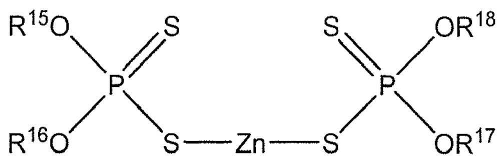

(5)

wherein $R^{15}$ to $R^{18}$ each independently represent a primary alkyl group, secondary alkyl group, or aryl group having 1 to 20 carbon atoms.

In the formula (5), $R^{15}$ to $R^{18}$ each independently represent a hydrocarbon group having 1 to 20 carbon atoms, and examples of such groups include primary alkyl groups such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group; secondary alkyl groups such as a secondary propyl group, a secondary butyl group, a secondary pentyl group, a secondary hexyl group, a secondary heptyl group, a secondary octyl group, a secondary nonyl group, a secondary decyl group, a secondary undecyl group, a secondary dodecyl group, a secondary tridecyl group, a secondary tetradecyl group, a secondary pentadecyl group, a secondary hexadecyl group, a secondary heptadecyl group, a secondary octadecyl group, a secondary nonadecyl group, and a secondary icosyl group; tertiary alkyl groups such as a tertiary butyl group, a tertiary pentyl group, a tertiary hexyl group, a tertiary heptyl group, a tertiary octyl group, a tertiary nonyl group, a tertiary decyl group, a tertiary undecyl group, a tertiary dodecyl group, a tertiary tridecyl group, a tertiary tetradecyl group, a tertiary pentadecyl group, a tertiary hexadecyl group, a tertiary heptadecyl group, a tertiary octadecyl group, a tertiary nonadecyl group, and a tertiary icosyl group; branched alkyl groups such as a branched butyl group (an isobutyl group and the like), a branched pentyl group (an isopentyl group and the like), a branched hexyl group (an isohexyl group), a branched heptyl group (an isoheptyl group), a branched octyl group (an isooctyl group, a 2-ethyl hexyl group, and the like), a branched nonyl group (an isononyl group and the like), a branched decyl group (an isodecyl group and the like), a branched undecyl group (an isoundecyl group and the like), a branched dodecyl group (an isododecyl group and the like), a branched tridecyl group (an isotridecyl group and the like), a branched tetradecyl group (an isotetradecyl group), a branched pentadecyl group (an isopentadecyl group and the like), a branched hexadecyl group (an isohexadecyl group), a branched heptadecyl group (an isoheptadecyl group and the like), a branched octadecyl group (an isooctadecyl group and the like), a branched nonadecyl group (an isononadecyl group and the like), and a branched icosyl group (an isoicosyl group and the like); and aryl groups such as a phenyl group, a tolyl group, a xylyl group, a cumenyl group, a mesityl group, a benzyl group, a phenethyl group, a styryl group, a cinnamyl group, a benzhydryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, a dodecylphenyl group, a styrenated phenyl group, a p-cumylphenyl group, a phenylphenyl group, and a benzylphenyl group. A preferable blending amount of such a wear preventing agent is 0.01 to 3 mass% and more preferably 0.05 to 2 mass% with respect to the base oil.

In addition, examples of oiliness improving agents include higher alcohols such as oleyl alcohol and stearyl alcohol; fatty acids such as oleic acid and stearic acid; esters such as oleyl glycerin ester, stearyl glycerin ester, and lauryl glycerin ester; amides such as laurylamide, oleylamide, and stearylamide; amines such as laurylamine, oleylamine, and stearylamine; and ethers such as lauryl glycerin ether and oleyl glycerin ether. A preferable blending amount of such an oiliness improving agent is 0.1 to 5 mass% and more preferably 0.2 to 3 mass% with respect to the base oil.

In addition, examples of detergents include sulfonates such as calcium, magnesium, and barium, and phenate, salicylate, phosphate and overbased salts thereof. Among these, overbased salts are preferable. Among these overbased salts, those having a TBN (total base number) of 30 to 500 mg KOH/g are more preferable. In addition, a salicylate detergent free of phosphorous and sulfur atoms is preferable. A preferable blending amount of such a detergent is 0.5 to 10 mass% and more preferably 1 to 8 mass% with respect to the base oil.

In addition, regarding ashless dispersants, any ashless dispersant used for a lubricant can be used without any particular limitation. Examples thereof include nitrogen-containing compounds having at least one linear or branched alkyl group or alkenyl group having 40 to 400 carbon atoms in a molecule and derivatives thereof. Specific examples thereof include succinimide, succinamide, succinate, succinate-amide, benzylamine, polyamine, polysuccinimide and Mannich base, and examples of derivatives thereof include those obtained by reacting such a nitrogen-containing compound with a boron compound such as boric acid and borate, a phosphorous compound such as thiophosphoric acid and thiophosphates, an organic acid, a hydroxy polyoxyalkylene carbonate, or the like. When the number of carbon atoms of an alkyl group or an alkenyl group is less than 40, the solubility of the compound in the base oil may be reduced. On the other hand, when the number of carbon atoms of an alkyl group or an alkenyl group exceeds 400, the low temperature fluidity of the friction inhibiting composition may deteriorate. A preferable blending amount of such an ashless dispersant is 0.5 to 10 mass% and more preferably 1 to 8 mass% with respect to the base oil.

In addition, examples of viscosity index improving agents include poly (C1 to 18)alkyl (meth) acrylates, (C1 to 18)alkyl acrylate/(C1 to 18)alkyl(meth)acrylate copolymers, diethylaminoethyl(meth)acrylate/(C1 to 18)alkyl(meth)acrylate copolymers, ethylene/(C1 to 18)alkyl(meth)acrylate copolymers, polyisobutylene, polyalkylstyrene, ethylene/propylene copolymers, styrene/maleic acid ester copolymers, and styrene/isoprene hydrogenated copolymers. Alternatively, a dispersive or multifunctional viscosity index improving agent imparted with dispersion performance may be used. The weight average molecular weight is about 10,000 to 1,500,000. A preferable blending amount of such a viscosity index improving agent is 0.1 to 20 mass% and more preferably 0.3 to 15 mass% with respect to the base oil.

In addition, examples of pour point depressants include polyalkyl methacrylate, polyalkyl acrylate, polyalkyl styrene, and polyvinyl acetate, and the weight average molecular weight thereof is 1,000 to 100,000. A preferable blending amount of such a pour point depressant is 0.005 to 3 mass% and more preferably 0.01 to 2 mass% with respect to the base oil.

In addition, examples of rust inhibiting agents include sodium nitrite, oxidized paraffin wax calcium salts, oxidized paraffin wax magnesium salts, tallow fatty acid alkali metal salts, alkaline earth metal salts or amine salts, alkenyl succinic acid or alkenyl succinic acid half ester (the molecular weight of the alkenyl group is about 100 to 300), sorbitan monoester, nonylphenol ethoxylate, and lanolin fatty acid calcium salts. A preferable blending amount of such a rust inhibiting agent is 0.01 to 3 mass% and more preferably 0.02 to 2 mass% with respect to the base oil.

In addition, examples of corrosion inhibiting agents and metal deactivating agents include triazole, tolyltriazole, benzotriazole, benzoimidazole, benzothiazole, benzothiadiazole and derivatives of these compounds such as 2-hydroxy-N-(1H-1,2,4-triazol-3-yl)benzamide, N,N-bis(2-ethylhexyl)-[(1,2,4-triazol-1-yl)methyl]amine, N,N-bis(2-ethylhexyl)-[(1,2,4-triazol-1-yl)methyl]amine and 2,2'-[[(4 or 5 or 1)-(2-ethylhexyl)-methyl-1H-benzotriazole-1-methyl]imino]biset hanol, and additionally, include bis(poly-2-carboxyethyl)phosphinic acid, hydroxyphosphonoacetic acid, tetraalkyl thiuram disulfide, N'1,N'12-bis(2-hydroxybenzoyl)dodecanedihydrazide, 3-(3,5-di-t-butyl-hydroxyphenyl)-N'-(3-(3,5-di-tert-butyl-hydr oxyphenyl)propanoyl)propane hydrazide, ester compounds of tetrapropenyl succinic acid and 1, 2-propanediol, disodium sebacate, (4-nonylphenoxy)acetic acid, alkylamine salts of mono and dihexyl phosphate, sodium salts of tolyltriazole and (Z)-N-methyl-N-(1-oxo9-octadecenyl)glycine. A preferable blending amount of such a corrosion inhibiting agent and metal deactivating agent is 0.01 to 3 mass% and more preferably 0.02 to 2 mass% with respect to the base oil.

In addition, examples of anti-foaming agents include polydimethyl silicone, dimethyl silicone oil, trifluoropropyl methyl silicone, colloidal silica, polyalkyl acrylate, polyalkyl methacrylate, alcohol ethoxy/propoxylate, fatty acid ethoxy/propoxylate and sorbitan partial fatty acid ester. A preferable blending amount of such an anti-foaming agent is 0.001 to 0.1 mass% and more preferably 0.001 to 0.01 mass% with respect to the base oil.

The friction inhibiting composition of the present invention can be used in various fuel oils such as vehicle lubricating oils (for example, gasoline engine oil and diesel engine oil for automobiles and motorcycles), industrial lubricating oils (for example, gear oil, turbine oil, oil film bearing oil, refrigerator lubricating oil, vacuum pump oil, compression lubricating oil, and multipurpose lubricating oil), and fuel oils for ships. Among these, the friction inhibiting composition of the present invention can be suitably used in vehicle lubricating oils.

Examples

While the present invention will be described below in detail with reference to examples, the present invention is not limited to these examples.

Table 3 shows the Hansen solubility parameters $\delta_d$, $\delta_p$, and $\delta_h$ and the Hildebrand solubility parameter $\delta$ of main polymerizable monomers which can be suitably used for the copolymer constituting the wear inhibiting compound of the present invention.

[Table 3]

| Polymerizable monomer | | Solubility parameter $(MPa)^{1/2}$ | | | |
|---|---|---|---|---|---|
| | | $\delta_d$ | $\delta_p$ | $\delta_h$ | $\delta$ |
| Polymerizable monomer (a) | Decyl acrylate | 17.1 | 2.3 | 5.8 | 18.2 |
| | Lauryl acrylate | 17.1 | 2.0 | 5.4 | 18.0 |
| | Cetyl acrylate | 17.0 | 1.6 | 4.8 | 17.7 |
| | Stearyl acrylate | 17.0 | 1.4 | 4.5 | 17.6 |
| Polymerizable monomer (b) | Hydroxyethyl acrylate | 19.8 | 9.3 | 18.9 | 28.9 |
| | Methyl acrylate | 17.9 | 7.6 | 10.4 | 22.0 |
| | Styrene | 20.4 | 1.2 | 1.5 | 20.5 |

Polymerizable monomers used in examples Polymerizable monomer (a)

(a-i): Lauryl acrylate
Polymerizable monomer (b)

(b-i): Hydroxyethyl acrylate

(b-ii): Styrene

<Example 1>

44.1 g of a highly refined base oil (hydrocarbon base oil having 20 to 50 carbon atoms, viscosity index: 112) as a solvent and 21.8 g of butyl acetate were put into a reaction container, and the temperate was raised to 110°C. 174.0 g of lauryl acrylate, 22.0 g of hydroxyethyl acrylate, 14.7 g of butyl acetate and 1.4 g of 2,2-azobisisobutyronitrile were added dropwise thereto as polymerizable monomers and the mixture was stirred for 2 hours. Then, while maintaining the temperature at 75°C to 85°C, 284.1 g of styrene, 75.9 g of lauryl acrylate, 28.2 g of hydroxyethyl acrylate, and 5.2 g of 2,2-azobisisobutyronitrile were added dropwise thereto as polymerizable monomers, the mixture was stirred for 4 hours to cause a polymerization reaction and thereby a copolymer was produced. Then, unreacted polymerizable monomers and butyl acetate were removed while the temperature was raised to 115°C to 125°C, to thereby prepare a copolymer solution.

Table 4 shows the molar ratio of the polymerizable monomers used, the weight average molecular weight calculated in terms of styrene using GPC, and solubility parameters calculated according to the Fedors method and the van Krevelen & Hoftyzer method of the obtained copolymer.

[Table 4]

| | | | Example 1 | Comparative Example 1 |
|---|---|---|---|---|
| Polymerizable monomer | Composition molar ratio | (a-i) | 0.25 | 0.64 |
| | | (b-i) | 0.10 | 0.36 |
| | | (b-ii) | 0.65 | 0 |

(continued)

| | | | Example 1 | Comparative Example 1 |
|---|---|---|---|---|
| Copolymer | Weight average molecular weight | | 47,000 | 250,000 |
| | Solubility parameter (MPa) $^{1/2}$ | $\delta_d$ | 18.8 | 17.5 |
| | | $\delta_p$ | 1.3 | 2.2 |
| | | $\delta_h$ | 6.1 | 8.9 |
| | | $\delta$ | 19.8 | 19.7 |

<Comparative Example 1>

In Example 1, the molar ratio of polymerizable monomers used was changed as shown in Table 4 to produce a copolymer. Table 4 shows the molar ratio of the polymerizable monomers used, the weight average molecular weight calculated in terms of styrene using GPC, and solubility parameters calculated according to the Fedors method and the van Krevelen & Hoftyzer method of the obtained copolymer.

<Evaluation of friction inhibiting characteristics>

The copolymers of Example 1 and Comparative Example 1 and as Comparative Example 2, glycerin monooleate was used as a friction inhibiting compound, friction inhibiting characteristics were evaluated. As the base oil in this example, a highly hydrocracked and refined base oil (a hydrocarbon base oil having 20 to 50 carbon atoms) was used. Here, for the solubility parameters of the base oil, median values $\delta_d$ = 16.3, $\delta_p$ = 0, $\delta_h$ = 0, $\delta$ = 16.3 of parameters of a hydrocarbon oil having 20 carbon atoms ($\delta_d$ = 16.1, $\delta_p$ = 0, $\delta_h$ = 0, $\delta$ = 16.1) and parameters of a hydrocarbon oil having 50 carbon atoms ($\delta_d$ = 16.5, $\delta_p$ = 0, $\delta_h$ = 0, $\delta$ = 16.5) were used.

0.5 mass% of the friction inhibiting compound was added with respect to the base oil, and molybdenum dithiocarbamate was added so that the molybdenum content became 800 ppm to prepare a friction inhibiting composition. The coefficient of friction of the friction inhibiting compositions was measured using a friction and wear test machine (HEIDEN TYPE: HHS2000, commercially available from Shinto Scientific Co., Ltd.) according to the following test conditions. As the coefficient of friction, an average value of coefficients of friction of 15 round trips before the test ended was used. The tests are shown in Table 5. In addition, the Hansen solubility parameter interaction distance D between the copolymer of Example 1 and the base oil was 7.9 $(MPa)^{1/2}$, and the Hansen solubility parameter interaction distance D between the copolymer of Comparative Example 1 and the base oil was 9.4 $(MPa)^{1/2}$.

Test conditions

Load: 9.8 N
Maximum contact pressure: $1.25\times10^{-7}$ Pa
Sliding speed: 5 mm/sec
Amplitude: 20 mm
Number of tests: 50 round trips
Test temperature: 40°C
Sliding speed: 5 mm/sec
Upper plate: AC8A-T6
Lower plate: SUJ2

[Table 5]

| Friction inhibiting compound | Copolymer of Example 1 | Copolymer of Comparative Example 1 | Glycerin monooleate | Unblended |
|---|---|---|---|---|
| Coefficient of friction | 0.030 | 0.044 | 0.036 | 0.052 |

Based on the above examples, it was found that the friction inhibiting compound of the present invention exhibited a strong friction inhibiting effect and when used in combination with a molybdenum compound conventionally used as a friction reducing agent, it was possible to obtain a friction inhibiting composition having superior friction inhibiting ability compared to a case using only a molybdenum compound without inhibiting respective effects.

<Examples 2 to 11>

The molar ratio of polymerizable monomers used in Example 1 was changed as shown in Table 6, and the reaction time was appropriately adjusted to produce copolymers. Table 6 shows the weight average molecular weight calculated in terms of styrene using GPC, solubility parameters calculated according to the Fedors method and the van Krevelen & Hoftyzer method, and the Hansen solubility parameter interaction distance when a hydrocarbon base oil having 20 to 50 carbon atoms ($\delta_d$ = 16.3, $\delta_p$ = 0, $\delta_h$, = 0, $\delta$ = 16.3) was used as a base oil of the obtained copolymers.

[Table 6]

| | | | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| **Polymerizable monomer** | Composition molar ratio | (a) | 0.25 | 0.35 | 0.44 | 0.44 | 0.21 | 0.16 | 0.12 | 0.16 | 0.23 | 0.32 |
| | | (b-1) | 0.11 | 0.15 | 0.14 | 0.14 | 0.09 | 0.09 | 0.05 | 0.04 | 0.00 | 0.00 |
| | | (b-2) | 0.65 | 0.50 | 0.42 | 0.42 | 0.70 | 0.75 | 0.83 | 0.80 | 0.77 | 0.68 |
| **Copolymer** | Weight average molecular weight | | 38,000 | 39,000 | 85,000 | 115,000 | 20,000 | 50,000 | 25,000 | 29,000 | 36,000 | 39,000 |
| | Solubility parameter | $\delta_d$ | 18.80 | 18.37 | 18.08 | 18.08 | 18.98 | 19.25 | 19.51 | 19.28 | 18.94 | 18.56 |
| | | $\delta_p$ | 1.27 | 1.48 | 1.56 | 1.56 | 1.18 | 1.15 | 1. 06 | 1.06 | 1.12 | 1.25 |
| | | $\delta_h$ | 6.17 | 6.84 | 6.69 | 6.69 | 5.78 | 5.72 | 4.68 | 4.55 | 3.73 | 4.14 |
| | | $\delta$ | 19.82 | 19.65 | 19.34 | 19.34 | 19.88 | 20.11 | 20.09 | 19.83 | 19.34 | 19.06 |
| **Hansen solubility parameter interaction distance** | Between monomer (a) and base oil | | 5.98 | 5.98 | 5.98 | 5.98 | 5.98 | 5.98 | 5.98 | 5.98 | 5.98 | 5.98 |
| | Between monomer (b) and base oil | | 10.69 | 11.91 | 12.18 | 12.18 | 10.24 | 10.14 | 9.38 | 9.24 | 8.49 | 8.49 |
| | Between copolymer and base oil | | 8.04 | 8.12 | 7.74 | 7.74 | 7.98 | 8.29 | 8.00 | 7.57 | 6.58 | 6.25 |

The copolymers of Examples 2 to 11 were able to be used as a friction inhibiting compound exhibiting a favorable friction reducing effect like the copolymer of Example 1. In addition, as necessary, additives such as molybdenum dithiocarbamate may be added for use.

## Claims

1. A friction inhibiting compound comprising a copolymer (A) that includes a polymerizable monomer (a) and a polymerizable monomer (b) as constituent monomers, wherein
the polymerizable monomer (a) includes alkyl acrylates or alkyl methacrylates represented by the following formula (1),
the polymerizable monomer (b) is at least one selected from the group consisting of hydroxyalkyl acrylates and hydroxyalkyl methacrylates represented by the following formula (2); alkyl acrylates and alkyl methacrylates represented by the following formula (3) and aromatic vinyl monomers having 8 to 14 carbon atoms, and
a composition ratio of the polymerizable monomer (a) and the polymerizable monomer (b) in the copolymer (A), represented by (a):(b), is (10 to 45):(55 to 90) in a molar ratio (provided that a total molar ratio of (a) and (b) is 100), and the weight average molecular weight of the copolymer (A) is 1,000 to 500,000:

[Chemical Formula 1]

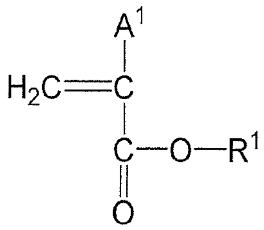

(1)

wherein $R^1$ represents an alkyl group having 4 to 18 carbon atoms, and $A^1$ represents a hydrogen atom or a methyl group;

[Chemical Formula 2]

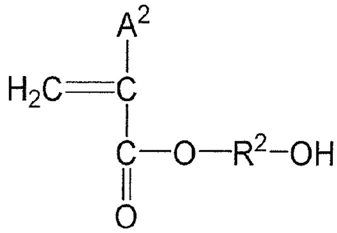

(2)

wherein $R^2$ represents an alkylene group having 2 to 4 carbon atoms, and $A^2$ represents a hydrogen atom or a methyl group;

[Chemical Formula 3]

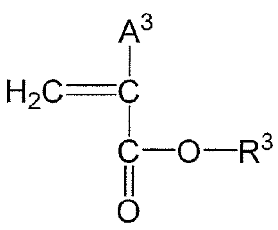

(3)

wherein $R^3$ represents an alkyl group having 1 to 3 carbon atoms, and $A^3$ represents a hydrogen atom or a methyl group.

2. The friction inhibiting compound according to claim 1, wherein the polymerizable monomer (b) includes at least one polymerizable monomer (b-1) selected from among hydroxyalkyl acrylates and hydroxyalkyl methacrylates represented by general formula (2) and a polymerizable monomer (b-2) composed of at least one aromatic vinyl monomer having 8 to 14 carbon atoms, and a composition ratio of the polymerizable monomers (a), (b-1), and (b-2) in the copolymer (A), represented by (a) : (b-1) : (b-2), is (10 to 45) : (2 to 80) : (5 to 88) in a molar ratio (provided that a total molar ratio of (a):(b-1):(b-2) is 100).

3. The friction inhibiting compound according to claim 1 or 2, wherein a Hildebrand solubility parameter of the copolymer (A) is 18.0 to 28.0 $(MPa)^{1/2}$.

4. A friction inhibiting composition comprising the friction inhibiting compound according to any one of claims 1 to 3, and a base oil (B), the friction inhibiting composition including 0.1 to 50 parts by mass of the friction inhibiting compound relative to 100 parts by mass of the base oil (B).

5. The friction inhibiting composition according to claim 4, wherein the base oil includes a hydrocarbon oil.

6. The friction inhibiting composition according to claim 4 or 5, further comprising a molybdenum compound, wherein the content of molybdenum in the friction inhibiting composition is 50 to 3,000 mass ppm.

**INTERNATIONAL SEARCH REPORT**

International application No.
PCT/JP2018/043516

A. CLASSIFICATION OF SUBJECT MATTER
Int.Cl. See extra sheet

According to International Patent Classification (IPC) or to both national classification and IPC

B. FIELDS SEARCHED

Minimum documentation searched (classification system followed by classification symbols)
Int.Cl. C10M145/14, C08F212/02, C08F220/18, C08F220/28, C10M143/10, C10M159/12, C10N10/12, C10N20/00, C10N20/04, C10N30/06, C10N40/02, C10N40/04, C10N40/12, C10N40/25, C10N40/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2015/076103 A1 (ADEKA CORPORATION) 28 May 2015, claims, paragraphs [0047], [0078]-[0088] & US 2016/0289589 A1, paragraphs [0042], [0063]-[0106], claims & EP 3072950 A1 & CN 105745313 A & KR 10-2016-0088910 A | 1-6 |
| X | JP 2013-124266 A (ADEKA CORPORATION) 24 June 2013, paragraphs [0037], [0049]-[0063] & US 2015/0299604 A1, paragraphs [0048]-[0094] & WO 2013/089143 A1 & EP 2792733 A1 & CN 104039940 A & KR 10-2014-0110847 A | 1, 3-6 |
| A | JP 5-320680 A (MITSUBISHI HEAVY INDUSTRIES, LTD.) 03 December 1993, claims (Family: none) | 1-6 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 February 2019 (05.02.2019) | 19 February 2019 (19.02.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/043516

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-210844 A (COSMO OIL LUBRICANTS CO., LTD.) 13 November 2014, paragraph [0052] (Family: none) | 1-6 |
| A | JP 57-137391 A (SOCIETE FRANCAISE D'ORGANO-SYNTHESE) 34 August 1982, claims & US 4496691 A, claims & EP 56342 A1 & FR 2497822 A1 | 1-6 |
| A | JP 2012-529550 A (EVONIK ROHMAX ADDITIVES GMBH) 22 November 2012, claims & US 2012/0053100 A1, claims & WO 2010/142789 A1 & EP 2440640 A1 & SG 176054 A & CA 2765300 A & CN 102459541 A & KR 10-2012-0036835 A | 1-6 |

Form PCT/ISA/210 (continuation of second sheet) (January 2015)

**INTERNATIONAL SEARCH REPORT**

International application No.
PCT/JP2018/043516

CLASSIFICATION OF SUBJECT MATTER
C10M145/14(2006.01)i, C08F212/02(2006.01)i, C08F220/18(2006.01)i, C08F220/28(2006.01)i, C10M143/10(2006.01)i, C10M159/12(2006.01)i, C10N10/12(2006.01)n, C10N20/00(2006.01)n, C10N20/04(2006.01)n, C10N30/06(2006.01)n, C10N40/02(2006.01)n, C10N40/04(2006.01)n, C10N40/12(2006.01)n, C10N40/25(2006.01)n, C10N40/30(2006.01)n

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0753983 B
- JP H1017586 B
- JP 2002012881 A
- JP 2005325241 A
- JP 2012041407 A
- JP 2017141439 A